# EUROPÄISCHE PATENTANMELDUNG

(11) **EP 2 189 820 A2**
(43) Veröffentlichungstag der Anmeldung: **26.05.2010**
(21) Anmeldenummer: 09014362.9
(22) Anmeldetag: 17.11.2009
(51) Int. Cl.: G01V 3/10

(54) **Detektorvorrichtung mit elektromagnetischen Sensor und Transportband**

(30) Priorität: 19.11.2008 DE 102008058232
(71) Anmelder: Sensorentechnologie Gettorf GmbH, 24214 Gettorf (DE)
(72) Erfinder: Hiss, Eckart, D-24105 Kiel (DE)
(74) Vertreter: Biehl, Christian

(57) **Zusammenfassung**

Vorrichtung zur Unterbrechung von Stromschleifen, die eine Metalldetektorspule umgeben und/oder beeinflussen, wobei in den Strompfad der Stromschleife eine elektrische Unterbrechung eingebracht ist.

## Beschreibung

Die Erfindung betrifft eine Detektorvorrichtung mit einem Transportband, einem daran befindlichen elektromagnetischen Sensor sowie metallischen Gerüst und Transportband-Rolleneinrichtungen nach dem Oberbegriff des Hauptanspruches.

Metalldetektoren bestehen in der Regel aus einer Metalldetektorspule und einem Auswertegerät die miteinander elektrisch verbunden sind. Die Metalldetektorspule ist in vielen Fällen unterhalb eines Transportbandes montiert und erfasst metallische Teile die oberhalb des Transportbandes transportiert werden.

Es sind auch Anordnungen bekannt, bei denen die zu transportierenden Teile durch den Innenquerschnitt der Spule hindurch geführt sind.

Die Transportbänder mit dem zu transportierenden Gut werden auf Rollen gelagert, die die von dem beladenen Transportband zu transportierenden Güter aufnehmen. Diese Transportrollen sind auf einem metallischen Gerüst montiert, sind selbst metallisch und weisen metallische Achsen auf, die in metallischen Lagervorrichtungen gelagert sind, wobei diese Lagerungen wiederum metallisch mit dem tragenden Gerüst verbunden sind. Aus konstruktiven Gründen ist die Metalldetektorspule zwischen zwei Rollen unterhalb des Transportbandes montiert.

Zusammen mit dem metallischen Gerüst und den Achslagerungen bildet diese Anordnung einen geschlossenen Strompfad, der das elektromagnetische Feld, dass von der Metalldetektorspule ausgeht, stören kann. Diese Störung ergibt sich dadurch, dass die von Gerüst, Achslagerung, Achse und Transportrolle gebildete Stromschleife wie eine Induktionsschleife wirkt, die Induktionsströme erzeugt.

Nachteilig bei diesen bekannten Anordnungen ist, dass schwankende Übergangswiderstände, die insbesondere durch die Achslagerungen der rotierenden Rollen entstehen, Stromschwankungen in der Induktionsschleife erzeugen, die von der Metalldetektorspule erfasst und als vorbeilaufende Metallstücke interpretiert werden. In solchen Fällen erfolgt ein sofortiger Bandstopp und der Produktionsfluss ist unterbrochen.

Aufgabe der Erfindung ist es, die oben geschilderten Nachteile zu vermeiden, insbesondere die Sensorantwort von störendem Einfluss befreit empfindlicher zu gestalten.

Die Lösung der Aufgabenstellung geschieht dadurch, dass in die die Metalldetektorspule umgebende Stromschleife ein Isolator eingebaut ist, der den Induktions-Stromfluss der Stromschleife, die die Metalldetektorspule umgibt, unterbricht.

Eine einfache Lösung dieses Problems besteht darin, dass die metallische Achse einer Transportrolle, die Nahe der Metalldetektorspule angeordnet ist, in einem elektrisch isolierendem Lagerblock geführt ist.

Dieser Lagerblock kann sowohl aus einem Kunststoff wie auch aus Keramik gefertigt sein. Es ist auch hinreichend, wenn eine die Achse einer Transportrolle umgebende elektrisch isolierende Hülse eingesetzt ist. Es ist auch möglich, das die Rollen tragende Gerüst an einer Stelle zu unterbrechen und die Unterbrechung durch einen Isolator zu überbrücken. Entscheidend ist jedoch, dass die die Metalldetektorspule umgebende Stromschleife unterbrochen ist,

Anhand von Ausführungsbeispiel wird die Erfindung näher erläutert. Dabei zeigt :
- Fig. 1: eine typische Transportvorrichtung, wie sie im landwirtschaftlichen Bereich zur Verarbeitung von Rüben aber auch im Straßenbau zum Transport von Baumaterialien verwendet wird,
- Fig. 2: eine schematische Darstellung des Metalldetektors,
- Fig. 3: eine Anordnung von Transportrollen, Transportgerüst, Achslagerungen und die aus diesen Teilen gebildete Stromschleife, und
- Fig. 4: die Achslagerung der Achse der Transportrolle in einem Kunststoffblock.

Die Metalldetektorspule 1 ist zwischen Transportrollen 8 unterhalb des Transportbandes 13 montiert, Die Transportrollen 8 sind über Achslagerungen 10 mit dem Transportgerüst 7 verbunden. Das Transportgut wird oberhalb der Metalldetektorspule 1 entlang geführt. Metallteile die sich zwischen dem Gut befinden, werden im Vorbeilauf oberhalb der Metalldetektorspule 1 erfasst.

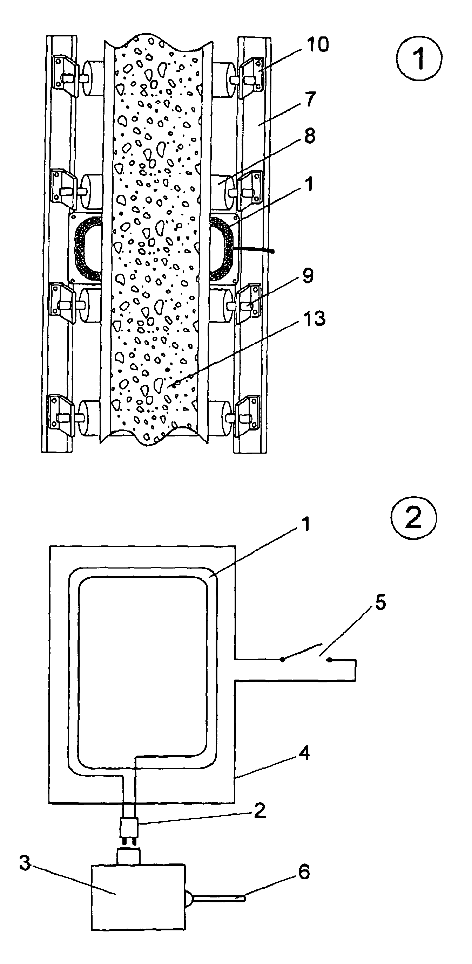

Fig. 2 zeigt eine schematische Darstellung des Metalldetektors nach dem Stand der Technik.

Die Metalldetektorspule 1, ist über eine Verbindung 2 mit einem Auswertegerät 3 verbunden das einen elektrischen Ausgang zur Signalgebung 6 aufweist. Das metallisch Gerüst, die Achsbefestigung der Transportrollen und die Achse der Transportrollen bilden eine Stromschleife 4, die bisher in unregelmäßigen zeitlichen Abständen durch das Rotieren der Transportrollen und deren Lagerung unterbrochen wurde, wie dies durch Schalter 5 symbolisiert wird. Diese Unterbrechung kann auch darin bestehen, dass der Stromfluss in der Stromschleife nicht vollständig sondern nur reduziert ist.

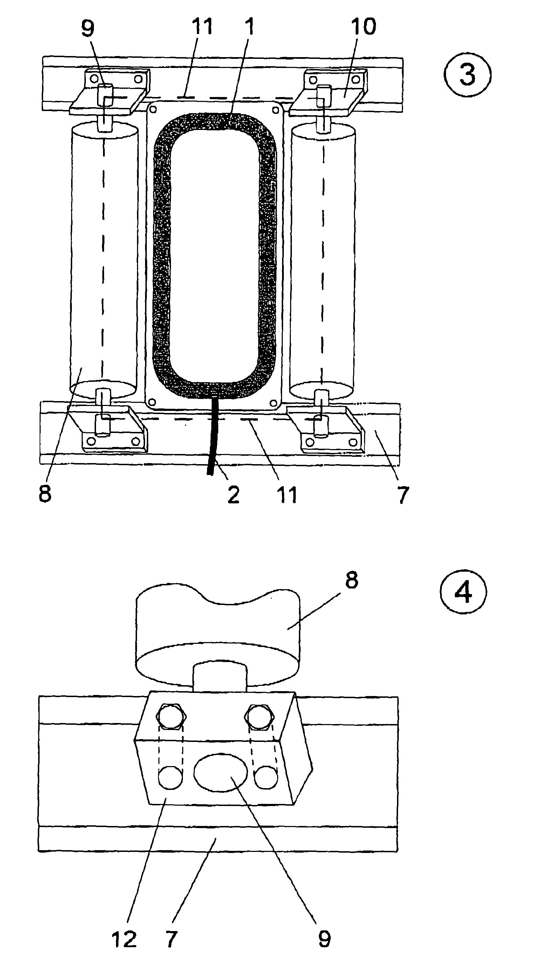

In Fig. 3 ist eine Anordnung von Transportrollen 8, Transportgerüst 7, Achslagerungen 10 und die aus diesen Teilen gebildete Stromschleife 11 dargestellt.

In Fig. 4 ist die Achslagerung der Achse 9, der Transportrolle 8 in einem Kunststoffblock 12 dargestellt. Der Kunststoffblock ist mit dem metallischen Gerüst 7 über Schrauben fest verbunden. Er bewirkt die elektrische Unterbrechung der Stromschleife.

Die erfindungsgemäße Detektorvorrichtung mit einem Transportband, einem daran befindlichen elektromagnetischen Sensor sowie metallischen Gerüst und Transportband-Rolleneinrichtungen, wird durch die Erfindung mit einem nicht-leitenden, die Stromschleife 4 unterbrechenden beliebeigen Bauteil, in den den elektromagnetischen Sensor umgebenden und/oder ein elektromagnetisches Sensorfeld beeinflussenden Gerüst- und Transportband-Rollenvortriebseinrichtungen versehen.

Vorzugsweise kann dies als stabile elektrische Unterbrechung z.B. ein Kunststoffblock sein, in dem die Achse einer Transportrolle geführt ist, z.B. eine Teflonblock.

Es kann aber auch die Achse 9 wenigstens einer Transportrolle 8 innerhalb einer isolierenden Buchse laufen oder die Achse 9 innerhalb wenigstens einer Transportrolle 8 einen elektrischen Isolator umfassen. Vorteilhaft werden diese Maßnahmen, d.h. Achslagerung 10 isolierend, Achse oder Gerüstteile, die isolierend sind, spiegel- und oder punktsymmetrisch um den Sensor mehrfach vorgesehen.

Jedenfalls ist dabei stets ein Teil des metallischen Gerüsts und/oder der Transportband-Rolleneinrichtungen den Pfad der Stromschleife unterbrechend elektrisch isolierend ausgebildet. Die elektromagnetische Sensoreinrichtung ist bevorzugt eine Metalldetektorspule.

## Patentansprüche

1. Detektorvorrichtung mit einem Transportband, einem daran befindlichen elektromagnetischen Sensor sowie metallischen Gerüst und Transportband-Rolleneinrichtungen, **gekennzeichnet durch**
ein nicht-leitendes, eine Stromschleife unterbrechendes Bauteil, in den den elektromagnetischen Sensor umgebenden und/oder ein elektromagnetisches Sensorfeld beeinflussenden Gerüst- und Transportband-Rollenvortriebseinrichtungen.

2. Detektorvorrichtung nach Anspruch 1, **dadurch gekennzeichnet, dass** die elektrische Unterbrechung ein Kunststoffblock (12) ist, in dem die Achse (9) einer Transportrolle (8) geführt ist.

3. Detektorvorrichtung nach einem der Ansprüche 1 oder 2, **dadurch gekennzeichnet, dass** die Achse (9) wenigstens einer Transportrolle (8) innerhalb einer isolierenden Buchse läuft.

4. Detektorvorrichtung nach einem der Ansprüche 1 bis 3, **dadurch gekennzeichnet, dass** die Achse (9) innerhalb wenigstens einer Transportrolle (8) einen elektrischen Isolator umfasst.

5. Detektorvorrichtung nach einem der Ansprüche 1 bis 4, **dadurch gekennzeichnet, dass** das ein Teil des metallischen Gerüsts (7) und/oder der Transportband-Rolleneinrichtungen den Pfad der Stromschleife (4) unterbrechend elektrisch isolierend ausgebildet ist.

6. Detektorvorrichtung nach einem der Ansprüche 1 bis 5, **dadurch gekennzeichnet, dass** das der elektromagnetische Sensor eine Metalldetektorspule (1) ist.
